# EUROPÄISCHE PATENTSCHRIFT

(11) **EP 1 894 776 B1**
(45) Veröffentlichungstag und Bekanntmachung des Hinweises auf die Patenterteilung: **16.09.2009**
(21) Anmeldenummer: 07014033.0
(22) Anmeldetag: 18.07.2007
(51) Int. Cl.: B60Q 1/26, B60Q 1/52

(54) **Helligkeitsregelung für eine Anzeigeeinrichtung**
Brightness regulation for a display device
Réglage de la luminosité pour un dispositif d'affichage

(30) Priorität: 30.08.2006 DE 102006040560
(43) Veröffentlichungstag der Anmeldung: 05.03.2008
(73) Patentinhaber: AUDI AG, 85045 Ingolstadt (DE)
(72) Erfinder: Erlacher. Markus, 85080 Gaimersheim (DE)
(74) Vertreter: Thielmann, Frank

(56) Entgegenhaltungen:
- EP-A- 1 630 778
- DE-A1- 10 338 647
- DE-A1-102004 028 613
- US-A1- 2004 160 657

## Beschreibung

Die Erfindung betrifft ein Kraftfahrzeug mit einer außerhalb angeordneten Anzeigeeinrichtung und mit einer Einrichtung zum Beeinflussen der Leuchtintensität der Anzeigeeinrichtung aufgrund eines ersten die Umweltbedingungen repräsentierenden Signals und aufgrund eines zumindest zweiten, die Sichtbedingungen auf die Anzeigeeinrichtung repräsentierenden Signals.

Aus der DE 103 38 647 and der DE 10 2004 028 613 sind Fahrerassistenzsysteme bekannt, die als Spurwechselassistent ausgebildet eine Anzeigeeinrichtung außerhalb des Kraftfahrzeuges aufweisen, die ein Warnsignal abgibt wenn ein Spurwechsel mit einer davon ausgehenden Gefahr verbunden ist. Zur Helligkeitssteuerung dieser Anzeigeeinrichtung wird ein Signal eines die Umgebungshelligkeit erfassenden Sensors herangezogen, der als Regensensor oder als Helligkeitssensor ausgeführt sein kann.

Aus der EP 1630778 und der US 2004 0160657 sind gattungsgemäße Helligkeitsregeleinrichtungen bekannt, die zur Helligkeitseinstellung zwei Sensoren aufweisen.

Aufgabe der Erfindung ist die weitere vorteilhafte Ausgestaltung eines Kraftfahrzeugs der eingangs genannten Art, insbesondere sollen weitergehende, die Erkennbarkeit der Anzeige der Anzeigeeinrichtung nachteilig beeinflussende Wirkungen möglichst aufgehoben werden.

Die Aufgabe wird erfindungsgemäß durch den Gegenstand des Patentanspruchs 1, 3 bzw. 4 gelöst.

Vorteile und Einzelheiten der Erfindung ergeben sich aus der nachfolgenden Beschreibung eines Ausführungsbeispieles anhand der Zeichnung in Verbindung mit den Unteransprüchen.

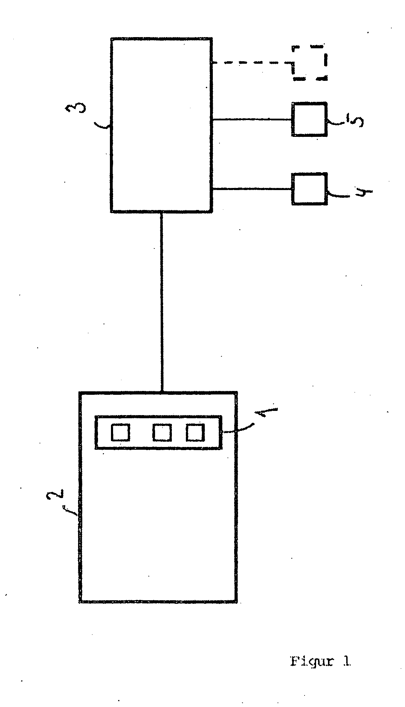

In der Figur 1 ist eine Anzeigeeinrichtung mit dem Bezugszeichen 1 gekennzeichnet. Diese Anzeigeeinrichtung 1 ist außerhalb des Kraftfahrzeugs, beispielsweise am oder im Bereich eines Außenspiegels 2 angeordnet. Die Anzeigeeinrichtung 1 ist beispielsweise Teil eines nicht dargestellten Spurwechselassistenten, der dazu dient, darauf aufmerksam zu machen, dass sich seitlich oder hinter dem Kraftfahrzeug ein weiteres Fahrzeug befindet. Besteht eine Kollisionsgefahr, so wird dies durch die Anzeigeeinrichtung 1, beispielsweise durch ein Leuchtsignal, angezeigt. Es ist bekannt die Anzeigeeinrichtung 1 mittels einer Einrichtung 3 zum Beeinflussen der Leuchtintensität aufgrund eines Signals eines die Umweltbedingungen repräsentierenden Sensors 4 derart anzusteuern, dass die von der Anzeigeeinrichtung 1 ausgegebenen Signale in Dunkelheit nicht zu hell und bei Tageslicht nicht zu dunkel erscheinen. Gemäß der Erfindung wird der Einrichtung 3 zum Beeinflussen der Leuchtintensität der Anzeigeeinrichtung 1 ein weiteres Signal eines zweiten Sensors 5 zugeführt dessen Signal die Sichtbedingungen auf die Anzeigeeinrichtung 1 repräsentiert. Dieses weitere Signal kann von einem im Innenraum des Kraftfahrzeugs angeordneten Lichtsensors ausgehen, der das von der Anzeigeeinrichtung 1 ausgehende Licht empfängt. Es hat sich als günstig erwiesen, eine Regelschleife auszubilden wobei über die Einrichtung 3 zum Beeinflussen der Leuchtintensität ein Testsignal erzeugt und der Anzeigeeinrichtung 1 zugeführt wird. Das von dem Testsignal erzeugte Lichtsignal der Anzeigeeinrichtung 1 wird von dem zweiten Sensor 5 empfangen und in der Einrichtung zum Beeinflussen der Leuchtintensität hinsichtlich der Einstellung einer Grundhelligkeit ausgewertet. Als zweiter Sensor 5 kann auch eine im Inneren des Kraftfahrzeugs angeordnete Kamera dienen. Es ist somit möglich, die Helligkeit der Anzeigeeinrichtung 1 auch in Abhängigkeit des Beschlages der Seitenscheibe des Kraftfahrzeuges mit Regen, Schnee, Eis und Tau bei der Einstellung der Grundhelligkeit zu berücksichtigen.

Um diese Einstellung zu ermöglichen, ist es alternativ oder additiv auch möglich der Einrichtung 3 zum Beeinflussen der Leuchtintensität ein Signal zu zuführen, das von einer Aktivierung des Scheibenwischers und/oder von der Geschwindigkeit des Kraftfahrzeuges abgeleitet wird. In Abhängigkeit von der Aktivierung des Scheibenwischers und vorteilhaft in Verbindung mit der Geschwindigkeit des Kraftfahrzeugs kann auf den Wasserniederschlag auf der Seitenscheibe geschlossen und somit die Grundhelligkeit der Anzeigeeinrichtung 1 günstig eingestellt werden.

Um diese Einstellung zu ermöglichen, ist es alternativ oder additiv auch möglich, der Einrichtung 3 zum Beeinflussen der Leuchtintensität die Signale Aktivierung des Scheibenwischers, Scheibenwischgeschwindigkeit und/oder Geschwindigkeit des Kraftfahrzeugs zur Verfügung zu stellen. In Abhängigkeit von der Aktivierung des Scheibenwischers, alternativ oder additiv der Scheibenwischgeschwindigkeit und vorteilhaft in Verbindung mit der Geschwindigkeit des Kraftfahrzeugs kann auf den Wasserniederschlag auf den Seitenscheiben geschlossen und somit die Grundhelligkeit der Anzeigeeinrichtung 1 günstig eingestellt werden.

### Liste der Bezugszeichen:

- 1.: Anzeigeeinrichtung
- 2.: Außenspiegel
- 3.: Einrichtung zum beeinflussen der Lichtintensität
- 4.: Sensor
- 5.: zweiter Sensor

## Patentansprüche

1. Kraftfahrzeug mit einer außerhalb angeordneten Anzeigeeinrichtung (1), mit einer Einrichtung zum Beeinflussen der Leuchtintensität (3) der Anzeigeeinrichtung (1) aufgrund eines ersten, die Umweltbedingungen und aufgrund eines zumindest zweiten, die Sichtbedingungen auf die Anzeigeeinrichtung (1) repräsentierenden Signals, **dadurch gekennzeichnet,**
**dass** das zweite Signal von einem im Inneren des Kraftfahrzeuges angeordneten Lichtsensors (5) erzeugt wird und
**dass** der Lichtsensor (5) ein von der Anzeigeeinrichtung (1) erzeugtes Lichtsignal empfängt und das Ausgangssignal des Lichtsensors (5) zur Einstellung einer Grundhelligkeit der Anzeigeeinrichtung (1) herangezogen wird.

2. Kraftfahrzeug nach Anspruch 1,
wobei der Lichtsensor (5) als Kamera ausgebildet ist.

3. Kraftfahrzeug mit einer außerhalb angeordneten Anzeigeeinrichtung (1), mit einer Einrichtung zum Beeinflussen der Leuchtintensität (3) der Anzeigeeinrichtung (1) aufgrund eines ersten, die Umweltbedingungen und aufgrund eines zumindest zweiten, die Sichtbedingungen auf die Anzeigeeinrichtung (1) repräsentierenden Signals, **dadurch gekennzeichnet,**
**dass** das zweite Signal von der Geschwindigkeit des Kraftfahrzeuges abgeleitet wird.

4. Kraftfahrzeug mit einer außerhalb angeordneten Anzeigeeinrichtung (1), mit einer Einrichtung zum Beeinflussen der Leuchtintensität (3) der Anzeigeeinrichtung (1) aufgrund eines ersten, die Umweltbedingungen und aufgrund eines zumindest zweiten, die Sichtbedingungen auf die Anzeigeeinrichtung (1) repräsentierenden Signals, **dadurch gekennzeichnet,**
**dass**, das zweite Signal von der Aktivierung des Scheibenwischers abgeleitet wird.

## Claims

1. Motor vehicle with a display device (1) arranged on the outside, with a device for controlling the light intensity (3) of the display device (1) based on a first signal representing the environmental conditions and based on at least a second signal representing the visibility conditions on the display device (1), **characterised in that**
the second signal is produced by a light sensor (5) arranged in the interior of the motor vehicle
the light sensor (5) receives a light signal produced by the display device (1) and the output signal of the light sensor (5) is used to adjust the background brightness of the display device (1).

2. Motor vehicle according to claim 1
in which the light sensor (5) is made as a camera.

3. Motor vehicle with a display device (1) arranged on the outside, with a device for controlling the light intensity (3) of the display device (1) based on a first signal representing the environmental conditions and based on at least a second signal representing the visibility conditions on the display device (1), **characterised in that**
the second signal is derived from the speed of the motor vehicle.

4. Motor vehicle with a display device (1) arranged on the outside, with a device for controlling the light intensity (3) of the display device (1) based on a first signal representing the environmental conditions and based on at least a second signal representing the visibility conditions on the display device (1), **characterised in that**
the second signal is derived from the activation of the windscreen wiper.

## Revendications

1. Véhicule automobile avec un dispositif d'affichage (1) disposé extérieurement, avec un dispositif pour influencer l'intensité lumineuse (3) du dispositif d'affichage (1) en raison d'un premier signal représentant les conditions environnementales et en raison d'au moins un second signal représentant les conditions de visibilité sur le dispositif d'affichage (1), **caractérisé en ce que**
le second signal est généré par un capteur de lumière (5) disposé à l'intérieur du véhicule automobile et
le capteur de lumière (5) reçoit un signal lumineux généré par le dispositif d'affichage (1) et il est fait appel au signal de sortie du capteur de lumière (5) pour le réglage d'une luminosité de base du dispositif d'affichage (1).

2. Véhicule automobile selon la revendication 1,
dans lequel le capteur de lumière (5) est réalisé comme une caméra.

3. Véhicule automobile avec un dispositif d'affichage (1) disposé extérieurement, avec un dispositif pour influencer l'intensité lumineuse (3) du dispositif d'affichage (1) en raison d'un premier signal représentant les conditions environnementales et en raison d'au moins un second signal représentant les conditions de visibilité sur le dispositif d'affichage (1), **caractérisé en ce que**
le second signal est dérivé de la vitesse du véhicule automobile.

4. Véhicule automobile avec un dispositif d'affichage (1) disposé en dehors, avec un dispositif pour influencer l'intensité lumineuse (3) du dispositif d'affichage (1) en raison d'un premier signal représentant les conditions environnementales et en raison d'au moins un second signal représentant les conditions de visibilité sur le dispositif d'affichage (1), **caractérisé en ce que**
le second signal est dérivé de l'activation de l'essuie-glace.
